# EUROPÄISCHE PATENTSCHRIFT

(11) **EP 2 496 874 B1**
(45) Veröffentlichungstag und Bekanntmachung des Hinweises auf die Patenterteilung: **01.08.2018**
(21) Anmeldenummer: 10770739.0
(22) Anmeldetag: 10.09.2010
(51) Int. Cl.: F16L 53/00

(54) **SYSTEM ZUM VERBINDEN VON SCHLAUCHLEITUNGEN**
SYSTEM FOR CONNECTING HOSE LINES
SYSTÈME DE RACCORDEMENT DE CONDUITES FLEXIBLES

(30) Priorität: 03.11.2009 DE 102009044404
(43) Veröffentlichungstag der Anmeldung: 12.09.2012
(73) Patentinhaber: ContiTech Techno-Chemie GmbH, 61184 Karben (DE)
(72) Erfinder: STEIN, Joachim, 61169 Friedberg (DE); DEHNERT, Olaf, 35625 Hüttenberg (DE); DANIEL, Gunther, 61169 Friedberg (DE)
(74) Vertreter: Finger, Karsten
(86) Internationale Anmeldenummer: PCT/EP2010/063269
(87) Internationale Veröffentlichungsnummer: WO 2011/054566

(56) Entgegenhaltungen:
- WO-A1-2009/080501
- DE-A1- 3 544 589
- DE-A1-102007 016 789
- DE-A1-102008 016 175
- DE-U1-202008 015 289
- JP-A- 11 159 685
- US-A1- 2003 099 469

## Beschreibung

Die Erfindung betrifft ein System zum Verbinden von Schlauchleitungen , bestehend aus einem Steckverbinder und einem elektrischen Heizelement, wobei der Steckverbinder mindestens einen ersten und einen zweiten Anschluss aufweist, die durch eine Rohrleitung miteinander verbunden sind, und wobei zumindest ein Abschnitt der Rohrleitung durch das elektrische Heizelement beheizbar ist. Mit Hilfe eines solchen Steckverbinders können in einem Leitungssystem entweder mehrere Schlauchleitungen oder eine Schlauchleitung mit einem Aggregat (wie z.B. einer Pumpe etc.) oder eine Schlauchleitung mit einem Flüssigkeitstank verbunden werden.

Systeme der eingangs genannten Art sind aus dem Stand der Technik bereits bekannt und werden in Leitungssystemen verwendet, in deren Leitungen Flüssigkeiten geführt werden, die bei niedrigen Umgebungstemperaturen einfrieren können. In einem derartigen Leitungssystem ist es üblich, die einzelnen Schlauchleitungen und die Steckverbinder zu beheizen, um das Einfrieren der in den Schlauchleitungen geführten Flüssigkeit zu verhindern. Leitungssysteme mit beheizten Schlauchleitungen und beheizten Steckverbindern werden beispielsweise in Scheibenwaschanlagen und in Leitungssystemen für eine Harnstofflösung eingesetzt, die als NOₓ-Reduktionsadditiv für Dieselmotoren mit SCR-Katalysatoren eingesetzt wird.

Ein System zum Verbinden von Schlauchleitungen der eingangs genannten Art ist beispielsweise aus der DE 10 2005 050 867 A1 bekannt. Der aus dieser Druckschrift bekannte Steckverbinder weist ein Gehäuse auf, in den ein Stecker eingeschoben wird, der ein Heizelement und zwei Kontaktelemente enthält, über die das Heizelement mit einer elektrischen Stromquelle verbunden wird. Mit Hilfe des Heizelementes wird ausschließlich der Abschnitt des Steckverbinders beheizt, in dem sich das Gehäuse befindet. In der genannten Druckschrift wird deshalb auch vorgeschlagen, das Heizelement mit einer Heizlanze zu versehen, die in die Rohrleitung des Steckverbinders hineinragt und dort die Flüssigkeit, die durch den Steckverbinder geführt wird, direkt beheizt. Durch das Vorsehen der Heizlanze kann die Flüssigkeit zuverlässig aufgeheizt werden. Es ist jedoch festzustellen, dass das aus der DE 10 2005 050 867 A1 bekannte System einen komplizierten Aufbau aufweist. Darüber hinaus muss die Heizlanze ausgehend von dem Heizelement in das Innere des Steckverbinders geführt werden, was zu Dichtigkeitsproblemen des Steckverbinders führen kann. Dokument US4558210 zeigt auch einen Steckverbinder nach dem Stand der Technik. Aus der WO 2008/131993 A1 ist ebenfalls ein System zum Verbinden von Schlauchleitungen bekannt. Bei dem aus dieser Druckschrift bekannten System wird die Rohrleitung des Steckverbinders mit einem elektrisch leitenden Draht umwickelt, der als elektrisches Heizelement dient. Auf der Oberfläche der Rohrleitung des Steckverbinders sind Führungselemente für den Heizdraht vorgesehen. Zum mechanischen Schutz des Heizdrahtes kann der Steckverbinder entweder umspritzt oder mit einer Kapselung versehen werden. Mit dem aus der WO 2008/131993 A1 bekannten System zum Verbinden von Schlauchleitungen kann der Steckverbinder über seine gesamte Länge beheizt werden, wodurch einem Einfrieren der Flüssigkeit, die durch den Steckverbinder geführt wird, sicher vorgebeugt ist. Das aus dieser Druckschrift bekannte System ist jedoch aus mehreren Gründen aufwändig in der Fertigung. So müssen auf der Oberfläche der Rohrleitung des Steckverbinders separate Führungselemente für den Heizdraht vorgesehen werden. Darüber hinaus muss der Heizdraht in engen Windungen aufwändig über die einzelnen Führungselemente geführt werden, was in einem automatisierten Prozess nicht oder nur schwierig möglich ist. Schließlich ist festzustellen, dass die Gefahr besteht, dass das System bereits während seiner Herstellung beschädigt wird. So wird der Heizdraht in engen Biegeradien über die Führungselemente geführt, was zu Beschädigungen des Heizdrahtes führen kann. Darüber hinaus kann auch das Umspritzen des Steckverbinders zu einer Beschädigung des empfindlichen Heizdrahtes führen.

Der Erfindung liegt die Aufgabe zugrunde, ein System zum Verbinden von Schlauchleitungen zu schaffen, dass ein elektrisches Heizelement enthält, mit dem der Steckverbinder zuverlässig und ausreichend beheizt werden kann und dass einfach und ausfallsicher auf dem Steckverbinder montiert werden kann.

Ausgehend von dem System der eingangs genannten Art wird die Aufgabe gemäß den Merkmalen des Anspruchs 1 gelöst. Vorzugsweise hat die Rohrleitung zumindest auf dem Abschnitt, auf den der Spannring aufgeschoben wird, einen kreisrunden Querschnitt und ist als Zylinderrohr ausgebildet. Dementsprechend ist vorzugsweise das lichte Innere des Spannringes ebenfalls kreisrund ausgebildet, so dass er die Rohrleitung optimal umgreifen kann. Hierbei sind der äußere Durchmesser der Rohrleitung und der innere lichte Durchmesser des Spannringes vorzugsweise derart aufeinander abgestimmt, dass der Spannring auf die Rohrleitung geklemmt ist. Es ist jedoch ebenfalls möglich, dass die Rohrleitung und der Spannring andere geometrische Ausgestaltungen als die oben genannten aufweisen. Zur Verwirklichung der Erfindung ist es lediglich wichtig, dass der auf die Rohrleitung geschobene Spannring diese umgreift und an der Rohrleitung anliegt.

Der mit der Erfindung erzielte Vorteil ist insbesondere darin zu sehen, dass das elektrische Heizelement in den Spannring, der den Steckverbinder umgreift, eingebettet ist und somit sicher gestellt ist, dass die Rohrleitung des Steckverbinders nahezu über ihren gesamten Umfang beheizt wird. Ein weiterer Vorteil der Erfindung ist darin zu sehen, dass der Spannring unabhängig von dem Steckverbinder gefertigt und erst nachträglich in einem einzigen Verfahrensschritt auf den Steckverbinder aufgeschoben wird. Dies ermöglicht eine Fertigung des Spannringes, die sicherstellt, dass während der Herstellung des Spannringes das Heizelement in dem Spannring nicht beschädigt wird. Darüber hinaus ermöglicht die separate Fertigung des Spannringes ein einfaches Nachrüsten von Steckverbindern, die kein Heizelement enthalten. Dazu wird ein separat gefertigter Spannring einfach nachträglich über die Rohrleitung des Steckverbinders geschoben und auf dieser verklemmt. Ein weiterer Vorteil der Erfindung ist schließlich darin zu sehen, dass die Montage des Spannringes und damit die Montage des Heizelementes auf den Steckverbinder automatisiert und maschinell durchgeführt werden kann.

Gemäß der Erfindung enthält das Heizelement eine erste elektrische Leiterbahn mit einem ersten elektrischen Anschluss und eine zweite elektrische Leiterbahn mit einem zweiten elektrischen Anschluss, die in einem Abstand voneinander jeweils in Umfangsrichtung des Spannelementes verlaufen und durch mindestens einen elektrischen Heizwiderstand elektrisch miteinander verbunden sind. Der erste und der zweite elektrische Anschluss dienen dazu, das Heizelement mit einer elektrischen Stromquelle zu verbinden. Der Vorteil dieser Weiterbildung ist darin zu sehen, dass mit einer derartigen Ausbildung des elektrischen Heizelementes der Spannring auf einfache Art und Weise sowohl über seinen gesamten Umfang als auch über seine gesamte Länge beheizt werden kann. Ein weiterer Vorteil dieser Weiterbildung ist darin zu sehen, dass mit Hilfe der Heizwiderstände, die in den Spannring eingebettet sind, die Heizleistung des Heizelementes auf einfache Art und Weise an die Anforderungen, die an den beheizbaren Steckverbinder gestellt werden, angepasst werden kann.

Gemäß einer Weiterbildung der Erfindung nach Anspruch 3 liegen die beiden Leiterbahnen in einem Abstand voneinander auf einer elektrisch isolierenden Folie und sind mit dieser verbunden. Beispielsweise können die Leiterbahnen auf die elektrisch isolierende Folie aufgedruckt sein. Der Vorteil dieser Weiterbildung ist darin zu sehen, dass die Folie mit den beiden Leiterbahnen während des Fertigungsprozesses des Spannringes einfach gehandhabt werden kann und die beiden Leiterbahnen auf der Folie dennoch vor Beschädigungen während des Fertigungsprozesses gut geschützt sind. Gemäß einer Weiterbildung der Erfindung nach Anspruch 4 ist die elektrisch isolierende Folie in einen topfartigen Spannring eingeführt, wobei der verbleibende Hohlraum des topfartigen Spannringes mit einem isolierenden Gussmaterial vollständig vergossen ist, und wobei die beiden Leiterbahnen aus dem Gussmaterial herausragen. Der Vorteil dieser Weiterbildung ist darin zu sehen, dass die Folie in dem fertigen Spannring vollständig von dem Gussmaterial umgeben ist und somit einer Beschädigung der Folie, der Leiterbahnen und der Heizwiderstände sicher vorgebeugt ist.

Gemäß einer Weiterbildung der Erfindung nach Anspruch 5 sind die beiden Leiterbahnen als Stanzteile ausgebildet, wobei jede Leiterbahn jeweils ein Aufnahmeelement für jeden Heizwiderstand enthält. Der Vorteil dieser Weiterbildung ist darin zu sehen, dass die beiden Leiterbahnen zunächst auf einfache Art und Weise aus einem einzigen Stanzteil aus elektrisch leitfähigem Material gefertigt werden können, wobei die beiden Leiterbahnen zunächst über eine Brücke miteinander verbunden sind. Die Brücke wird, nachdem die beiden Leiterbahnen über den mindestens einen Heizwiderstand miteinander verbunden sind, entfernt.

Gemäß einer Weiterbildung der Erfindung nach Anspruch 6 weist das Heizelement einen dritten elektrischen Anschluss auf, der an der ersten Leiterbahn befestigt ist, und einen vierten elektrischen Anschluss auf, der an der zweiten Leiterbahn befestigt ist. Der dritte und der vierte elektrische Anschluss dienen dazu, die Enden eines Heizdrahtes, der um eine Schlauchleitung gewickelt ist, die an den Steckverbinder angeschlossen ist, über das Heizelement mit einer Stromquelle zu verbinden. Der Vorteil der Weiterbildung ist also darin zu sehen, dass der Heizdraht eines Schlauches auf einfache Art und Weise mit dem Heizelement und mit der Stromquelle verbunden werden kann.

Gemäß einer Weiterbildung der Erfindung nach Anspruch 7 sind die elektrischen Anschlüsse hülsenartig zur Aufnahme eines elektrischen Stiftkontaktes ausgebildet. Vorzugsweise werden alle vier elektrischen Anschlüsse derart ausgebildet. Der Vorteil dieser Weiterbildung ist darin zu sehen, dass in die Anschlüsse elektrische Stiftkontakte eingeschoben werden können, die als Standardbauteile verfügbar und einfach zu handhaben sind.

Gemäß einer Weiterbildung der Erfindung nach Anspruch 8 sind sämtliche Bestandteile des Heizelementes (nämlich die Leiterbahnen, die Heizwiderstände und die elektrischen Anschlüsse) zur Bildung des Spannringes vollständig von einem fließfähigen Kunststoff umgeben. Im Zusammenhang mit den elektrischen Anschlüssen ist das Merkmal, dass diese vollständig von einem fließfähigen Kunststoff umgeben sind, derartig zu verstehen, dass die äußeren Oberflächen der hülsenartigen Anschlüsse von dem fließfähigen Kunststoff umgeben sind, wohingegen die inneren Oberflächen der hülsenartigen Anschlüsse frei von dem Kunststoff sind, so dass sie in elektrischen Kontakt mit den Stiftkontakten gebracht werden können. Der Vorteil dieser Weiterbildung ist darin zu sehen, dass die Bestandteile des Heizelementes gut vor mechanischen Einflüssen und Umwelteinflüssen (z.B. Feuchtigkeit) geschützt sind. Ein weiterer Vorteil der Weiterbildung ist darin zu sehen, dass die Kunststoffhülle für das Heizelement zur Herstellung des Spannringes im Spritzgussverfahren erzeugt werden kann. Der Spannring mit dem Heizelement kann somit auf einfache Art und Weise und kostengünstig in großen Stückzahlen gefertigt werden.

Gemäß einer Weiterbildung der Erfindung nach Anspruch 9 ist der Kunststoff elektrisch isolierend. Der Vorteil dieser Weiterbildung ist darin zu sehen, dass die elektrisch leitenden Bestandteile des Heizelementes vor dem Umspritzen mit dem Kunststoffinaterial nicht mit einer elektrisch isolierenden Schicht versehen zu werden brauchen.

Gemäß einer Weiterbildung der Erfindung nach Anspruch 10 ist das System über Stiftkontakte, die in die hülsenartigen Anschlüsse eingeschoben sind, mit elektrischen Bauteilen verbindbar, wobei die Stiftkontakte jeweils von einer ringförmigen Dichtung umgeben sind, die derartig dimensioniert sind, dass sie die hülsenartigen Anschlüsse nach außen hin abdichten. Vorzugsweise besteht die Dichtung aus Silikon. Der Vorteil dieser Weiterbildung ist darin zu sehen, dass die elektrischen Anschlüsse vollständig nach außen gekapselt sind und insbesondere keine Feuchtigkeit an die Stiftkontakte oder an das Heizelement vordringen kann.

Gemäß einer Weiterbildung der Erfindung nach Anspruch 11 ist der Spannring elastisch verformbar ausgebildet. Der Vorteil dieser Weiterbildung ist darin zu sehen, dass der Spannring, um ihn auf die Rohrleitung zu schieben, aufgebogen werden kann und nach dem Aufschieben wieder in seine ursprüngliche Form zurückgeht. Dies ermöglicht es, den Spalt in dem Spannring schmal auszubilden (der Spalt überdeckt maximal 10° bis 60°, vorzugsweise maximal 15° bis 30°, der 360° des Spannringes), so dass die Rohrleitung nahezu über ihren gesamten Umfang beheizt wird.

Ausführungsbeispiele und weitere Vorteile der Erfindung werden im Zusammenhang mit den nachstehenden Figuren erläutert, darin zeigt:
- Fig. 1: einen Steckverbinder,
- Fig. 2: einen Spannring,
- Fig. 3: ein System zum Verbinden von Schlauchleitungen,
- Fig. 4: ein Heizelement,
- Fig. 5: ein Heizelement,
- Fig. 6: einen Spannring.

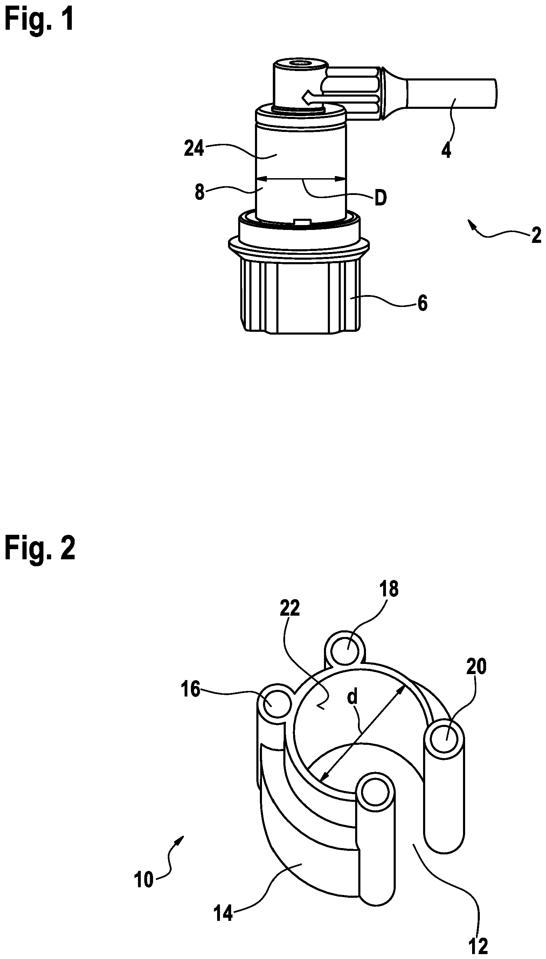

Fig. 1 zeigt einen Steckverbinder 2 mit einem ersten Anschluss 4 und einem zweiten Anschluss 6, die über eine Rohrleitung 8 miteinander verbunden und rechtwinkelig zueinander angeordnet sind. An den ersten Anschluss 4 wird in einem Leitungssystem in an sich bekannter Art und Weise eine Schlauchleitung, durch die eine Flüssigkeit geführt wird, angeschlossen. An den zweiten Anschluss 6 kann eine weitere Schlauchleitung des Leitungssystems oder ein Aggregat (wie z.B. eine Pumpe etc.) oder ein Flüssigkeitstank angeschlossen werden. Die Rohrleitung 8, die den ersten Anschluss 4 mit dem zweiten Anschluss 6 verbindet, ist als Zylinderrohr mit einem kreisrunden Querschnitt ausgebildet.

Fig. 2. zeigt einen Spannring 10, in den ein elektrisches Heizelement eingebettet ist. Der Spannring 10 weist einen Spalt 12 und vier elektrische Anschlüsse 14, 16, 18 und 20 auf. Der lichte Durchmesser d des Spannringes 10 entspricht in etwa dem äußeren Durchmesser D der Rohrleitung 8 (siehe Fig. 1; 0,95 D ≤ d ≤ D).

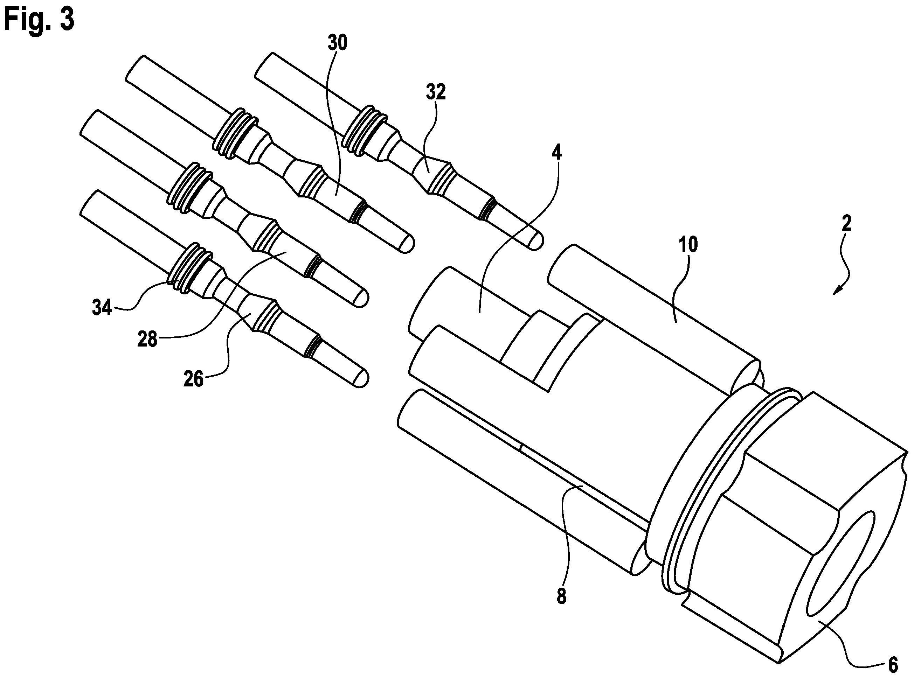

Fig. 3 zeigt ein System zum Verbinden von Schlauchleitungen bestehend aus einem Steckverbinder 2 und einem Spannring 10, in den ein Heizelement eingebettet ist. Bei dem in der Fig. 3 sind die beiden Anschlüsse 4, 8 in Längsrichtung des Steckverbinders 2 ausgerichtet, die durch die Längsachse der Rohrleitung 8 vorgegeben ist. Der Spannring 10 ist auf die Rohrleitung 8 aufgeschoben, wozu die Rohrleitung 8 durch den Spalt 12 des Spannringes 10 geschoben ist. Der Spannring 10 ist derart auf die Rohrleitung 8 aufgeschoben und dimensioniert, dass sein Spalt 12 in Längsrichtung der Rohrleitung 8 verläuft und der Spannring 10 die Rohrleitung 8 in Umfangsrichtung nahezu vollständig (mit Ausnahme des Bereiches des Spaltes 12) und in Längsrichtung zumindest bereichsweise umgreift. Vorzugsweise ist der Spannring 10 so lang wie die Rohrleitung 8, so dass er diese über die gesamte Länge umgreift, wie es auch in der Fig. 3 gezeigt ist. Da der lichte Durchmesser d des Spannringes 10 in etwa dem Durchmesser D der Rohrleitung 8 entspricht, liegt die innere Oberfläche 22 des Spannringes 10 (siehe Fig. 2) bei dem fertiggestellten System auf der äußeren Oberfläche 24 der Rohrleitung 8 (siehe Fig. 1) auf. Hierdurch ist ein guter Wärmeübertrag zwischen dem Spannring 10 mit dem eingebetteten Heizelement und der Rohrleitung 8 des Steckverbinders 2 gewährleistet. Ferner ist der Spannring 10 aufgrund der genannten Dimensionierung auf der Rohrleitung 8 sicher verklemmt und somit in seiner Position auf der Rohrleitung 8 ohne weitere Befestigungselemente sicher in seiner Lage fixiert.

In die elektrischen Anschlüsse 14, 16, 18 und 20 (siehe auch Fig. 2) werden in einem Leitungssystem elektrische Stiftkontakte 26, 28, 30 und 32 eingeschoben. Hierbei dienen zwei der elektrischen Stiftkontakte dazu, um das in den Spannring 10 eingebettete Heizelement mit einer Stromquelle zu verbinden. Die beiden anderen elektrischen Anschlüsse werden dazu mit zwei weiteren Stiftkontakten verbunden, von denen der erste Stiftkontakt mit dem ersten Ende eines Heizdrahtes und der zweite Stiftkontakt mit dem zweiten Ende eines Heizdrahtes verbunden ist. Der Heizdraht ist zur Beheizung des Schlauches, der an dem ersten Anschluss 4 angeschlossen ist (in Fig. 3 nicht gezeigt), gewickelt. Dies führt dazu, dass der elektrische Heizdraht des Schlauches über das in den Spannring 10 eingebettete Heizelement ebenfalls mit der Stromquelle verbunden ist. Jeder Stiftkontakt 26, 28, 30 und 32 ist jeweils mit einer ringförmigen Silikondichtung 34 versehen. Diese ist derart auf dem Stiftkontakt angeordnet, dass sie von dem jeweiligen hülsenartigen elektrischen Anschluss 14, 16, 18 und 20 aufgenommen wird, wenn der jeweilige Stiftkontakt 26, 28, 30 und 32 vollständig in diesen eingeschoben ist. Hierbei ist die Silikondichtung derart dimensioniert, dass sie an der Innenwand der hülsenartigen elektrischen Anschlüsse 14, 16, 18 und 20 anliegt und diesen nach außen hin abdichten.

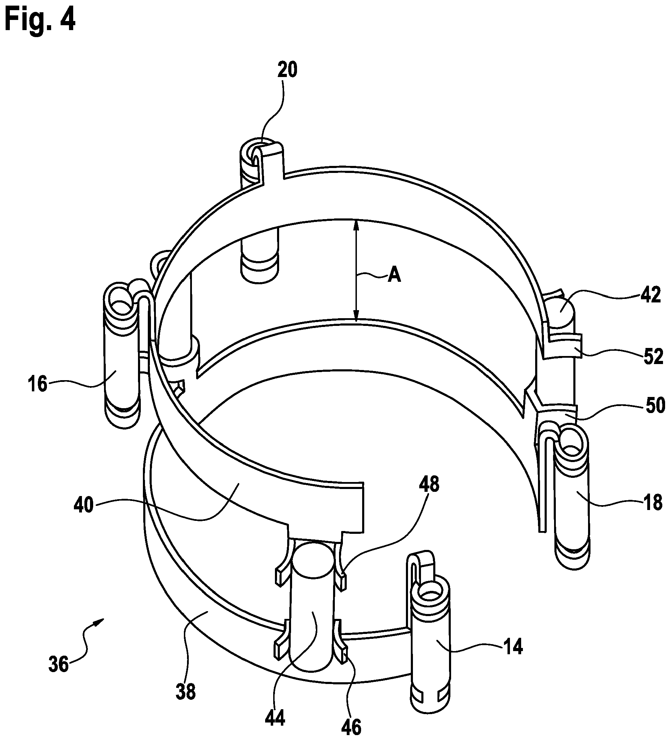

Fig. 4 zeigt ein Heizelement 36 in perspektivischer Darstellung. Das Heizelement 36 weist eine erste elektrische Leiterbahn 38 mit einem ersten elektrischen Anschluss 14 und eine zweite elektrische Leiterbahn 40 mit einem zweiten elektrischen Anschluss 18 auf. Die erste elektrische Leiterbahn 38 und die zweite elektrische Leiterbahn 40 sind in einem Abstand A voneinander angeordnet und über elektrische Heizwiderstände 42 und 44 elektrisch leitend miteinander verbunden. Hierbei ist der Abstand A so gewählt, dass die beiden Leiterbahnen in dem fertigen Spannring 10 einen Abstand zueinander einnehmen, der in etwa der Länge der Rohrleitung 8 des Steckverbinders 2 (s. Fig. 1) entspricht. Hierdurch wird eine gleichmäßige Beheizung der Rohrleitung über ihre gesamte Länge sichergestellt.

Die beiden Leiterbahnen 38, 40 sind als Stanzteile ausgebildet und enthalten jeweils Aufnahmeelemente 46, 48, 50 und 52 für die Heizwiderstände 42,44. Die Heizwiderstände 42, 44 sind in die Aufnahmeelemente 46, 48, 50 und 52 eingeklipst. Die Leiterbahnen 38, 40 können zunächst aus einem einzigen Stanzteil heraus gestanzt werden, wobei sie dann noch über ein Brücke miteinander verbunden sind. Die Brücke wird entfernt, sobald die Leiterbahnen 38, 40 durch die Heizwiderstände 42, 44 miteinander verbunden sind.

Neben den bereits genannten elektrischen Anschlüssen 14, 16 enthält die erste Leiterbahn 38 einen dritten elektrischen Anschluss 18 und die zweite elektrische Leiterbahn 40 einen vierten elektrischen Anschluss 20. Die elektrischen Anschlüsse 14, 16, 18 und 20 sind hülsenartig ausgebildet und bestehen aus Metall. An die elektrischen Anschlüsse 14 und 16 werden in einem fertigen Leitungssystem die Stiftkontakte für die Stromquelle angebunden (siehe auch Fig. 3) und an die Anschlüsse 18 und 20 werden die Stiftkontakte für den Heizdraht des Schlauches (siehe auch Figurenbeschreibung zu Fig. 3) angebunden.

Das in der Fig. 4 gezeigte Heizelement 10 wird vollständig von einem fließfähigen, elektrisch isolierenden Kunststoff umgeben, so dass der in der Fig. 2 gezeigte Spannring 10 entsteht. Vorzugsweise erfolgt dies im Spritzgussverfahren, wobei ein elektrisch isolierender Kunststoff verwendet wird. Das Heizelement 36 liegt hierbei so in dem fertigen Spannring 10, dass die elektrischen Leiterbahnen 38 und 40 in Umfangsrichtung des Spannringes verlaufen. Dementsprechend verlaufen die Längsachsen der Heizwiderstände 42, 44 und der hülsenartigen elektrischen Anschlüsse 14, 16, 18 und 20 parallel zu der Längsachse des Spannringes 10 (siehe auch Fig. 2). Aufgrund dessen, dass das in der Fig. 4 gezeigte Heizelement 36 elastisch verformbar ist, ist auch der fertiggestellte Spannring 10 elastisch verformbar und kann einfach über die Rohrleitung 8 (siehe Figuren 1 und 3) geschoben und dort verklemmt werden.

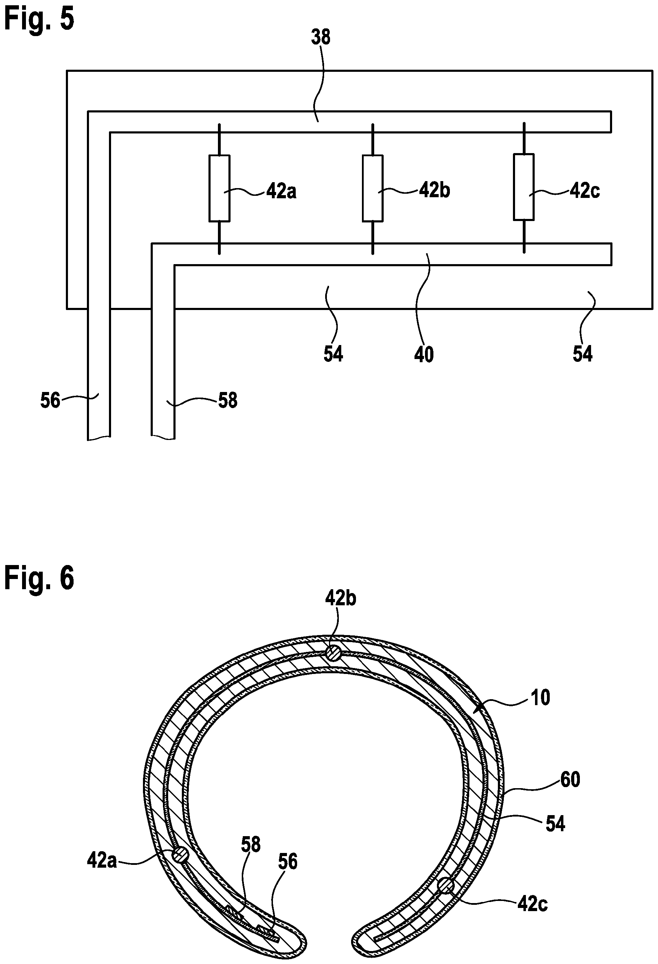

Fig. 5 zeigt ein weiteres Ausführungsbeispiel für ein Heizelement 36. Das Heizelement 36 enthält eine elektrisch isolierende Folie 54, auf der die erste elektrische Leiterbahn 38 und die zweite elektrische Leiterbahn 40 angeordnet ist. Die Leiterbahnen 38, 40 sind über elektrische Heizwiderstände 42a bis c miteinander verbunden. An einem Ende knickt jede Leiterbahn 38, 40 in einem rechten Winkel ab und wird in dieser Richtung über die Folie 36 hinaus geführt.

Fig. 6 zeigt einen Spannring 10, in den die elektrisch isolierende Folie 36 eingebracht ist. Der Spannring 10 ist topfartig ausgebildet und in den Topf des Spannringes 10 ist die Folie 36 derart eingesteckt, dass die Leiterbahnen 36, 40 (siehe Fig. 5) in Umfangsrichtung des Spannringes 10 verlaufen. Darüber hinaus sind die Heizwiderstände 42a, 42b und 42c derart ausgerichtet, dass ihre Längsachsen parallel zu der Längsachse des Spannringes 10 verlaufen. Die beiden Leiterbahnenden 56, 58 sind derart orientiert, dass sie aus der Papierebene herausragen. Sie werden dazu benutzt, die beiden Leiterbahnen 38, 40 mit einer Stromquelle zu verbinden. Nachdem die Folie 36 in den Topf des Spannringes 10 eingebracht worden ist, wird der verbleibende Hohlraum zwischen Topf und Folie mit einem elektrisch isolierenden Gussmaterial 60 vollständig vergossen. Auch der in der Fig. 6 gezeigte Spannring 10 ist elastisch verformbar ausgebildet, so dass er einfach über die Rohrleitung 8 (siehe Figuren 1 und 3) geschoben und dort verklemmt werden kann.

### Bezugszeichenliste

### (Teil der Beschreibung)

- 2: Steckverbinder
- 4: erster Anschluss
- 6: zweiter Anschluss
- 8: Rohrleitung
- 10: Spannring
- 12: Spalt
- 14: elektrischer Anschluss
- 16: elektrischer Anschluss
- 18: elektrischer Anschluss
- 20: elektrischer Anschluss
- 22: innere Oberfläche
- 24: äußere Oberfläche
- 26: elektrischer Stiftkontakt
- 28: elektrischer Stiftkontakt
- 30: elektrischer Stiftkontakt
- 32: elektrischer Stiftkontakt
- 34: Dichtring
- 36: Heizelement
- 38: elektrische Leiterbahn
- 40: elektrische Leiterbahn
- 42: Heizwiderstand
- 44: Heizwiderstand
- 46: Aufnahmeelement
- 48: Aufnahmeelement
- 50: Aufnahmeelement
- 52: Aufnahmeelement
- 54: Folie
- 56: Leiterbahnende
- 58: Leiterbahnende
- 60: Gussmaterial

## Patentansprüche

1. System zum Verbinden von Schlauchleitungen, bestehend aus einem Steckverbinder (2) und einem elektrischen Heizelement (36),
wobei der Steckverbinder (2) mindestens einen ersten (4) und einen zweiten Anschluss (6) aufweist, die durch eine Rohrleitung (8) miteinander verbunden sind, und
wobei zumindest ein Abschnitt der Rohrleitung (8) durch das elektrische Heizelement (36) beheizbar ist,
wobei das elektrische Heizelement (36) in einen Spannring (10) mit einem Spalt (12) eingebettet ist,
wobei die Rohrleitung (8) derart durch den Spalt (12) des Spannringes (10) geschoben werden kann, dass der Spannring (10) zumindest einen Abschnitt der Rohrleitung (8) umgreift und an der Rohrleitung (8) anliegt,
**dadurch gekennzeichnet,**
**dass** das Heizelement (36) eine erste elektrische Leiterbahn (38) mit einem ersten elektrischen Anschluss (14) und eine zweite elektrische Leiterbahn (40) mit einem zweiten elektrischen Anschluss (16) enthält,
die in Längsrichtung des Spannrings (10) um einen Abstand A voneinander beabstandet sind,
die jeweils in Umfangsrichtung des Spannringes (10) verlaufen und
die durch mindestens einen in Längsrichtung des Spannrings (10) verlaufenden elektrischen Heizwiderstand (42, 44) elektrisch miteinander verbunden sind.

2. System nach Anspruch 1, **dadurch gekennzeichnet, dass** die beiden Leiterbahnen (38, 40) in Längsrichtung des Spannrings (10) um einen Abstand A voneinander beabstandet auf einer elektrisch isolierenden Folie (54) liegen und mit dieser verbunden sind.

3. System nach Anspruch 2, **dadurch gekennzeichnet, dass** die elektrisch isolierende Folie (54) in einen topfartigen Spannring (10) eingeführt ist und der verbleibende Hohlraum des topfartigen Spannringes (10) mit einem isolierenden Gussmaterial (60) vollständig vergossen ist, wobei die beiden Leiterbahnen (38, 40) aus dem Gussmaterial (60) herausragen.

4. System nach Anspruch 1, **dadurch gekennzeichnet, dass** die beiden Leiterbahnen (38, 40) als Stanzteile ausgebildet sind und jede Leiterbahn (38, 40) jeweils ein Aufnahmeelement (46, 48, 50, 52) für jeden Heizwiderstand (42, 44) enthält.

5. System nach Anspruch 4, **dadurch gekennzeichnet, dass** das Heizelement (36) einen dritten elektrischen Anschluss (18) aufweist, der an der ersten Leiterbahn (38) befestigt ist und einen vierten elektrischen Anschluss (20) aufweist, der an der zweiten Leiterbahn (40) befestigt ist.

6. System nach einem der Ansprüche 4 bis 5, **dadurch gekennzeichnet, dass** die elektrischen Anschlüsse (14, 16, 18, 20) hülsenartig zur Aufnahme jeweils eines elektrischen Stiftkontaktes (26, 28, 30, 32) ausgebildet sind.

7. System nach einem der Ansprüche 4 bis 6, **dadurch gekennzeichnet, dass** sämtliche Bestandteile des Heizelementes (36) zur Bildung des Spannringes (10) vollständig von einem fließfähigen Kunststoff umgeben sind.

8. System nach Anspruch 7, **dadurch gekennzeichnet, dass** der Kunststoff elektrisch isolierend ist.

9. System nach einem der Ansprüche 6 bis 8, **dadurch gekennzeichnet, dass** das System über Stiftkontakte (26, 28, 30, 32), die in die hülsenartigen Anschlüsse (14, 16, 18, 20) eingeschoben sind, mit elektrischen Bauteilen verbindbar ist, wobei die Stiftkontakte (26, 28, 30, 32) jeweils von einer ringförmigen Dichtung (34) umgeben sind, die derart dimensioniert ist, dass sie die hülsenartigen Anschlüsse (14, 16, 18, 20) nach außen hin abdichten.

10. System nach einem der Ansprüche 1 bis 9, **dadurch gekennzeichnet, dass** der Spannring (10) elastisch verformbar ausgebildet ist.

## Claims

1. System for connecting hose lines, consisting of a plug-in connector (2) and an electric heating element (36),
wherein the plug-in connector (2) has at least one first (4) and one second connection (6), which are connected to one another by a tube (8), and wherein at least one section of the tube (8) can be heated by the electric heating element (36), wherein the electric heating element (36) is embedded into a clamping ring (10) with a gap (12),
wherein the tube (8) can be pushed through the gap (12) of the clamping ring (10) in such a way that the clamping ring (10) reaches around at least one section of the tube (8) and bears against the tube (8),
**characterized**
**in that** the heating element (36) contains a first electric conductive track (38) having a first electric connection (14) and a second electric conductive track (40) having a second electric connection (16),
which are spaced apart from one another by a distance A in the longitudinal direction of the clamping ring (10),
which each extend in the circumferential direction of the clamping ring (10) and
which are connected electrically to one another by at least one electric heating resistor (42, 44) extending in the longitudinal direction of the clamping ring (10).

2. System according to Claim 1, **characterized in that** the two conductive tracks (38, 40) are spaced apart by from one another by a distance A in the longitudinal direction of the clamping ring (10) on an electrically insulating film (54) and are connected to the latter.

3. System according to Claim 2, **characterized in that** the electrically insulating film (54) is introduced into a pot-like clamping ring (10), and the remaining cavity in the pot-like clamping ring (10) is completely filled with an insulating potting material (60), wherein the two conductive tracks (38, 40) project from the potting material (60) .

4. System according to Claim 1, **characterized in that** the two conductive tracks (38, 40) are designed as stampings, and each conductive track (38, 40) contains a locating element (46, 48, 50, 52) for each heating resistor (42, 44).

5. System according to Claim 4, **characterized in that** the heating element (36) has a third electric connection (18), which is secured on the first conductive track (38), and has a fourth electric connection (20), which is secured on the second conductive track (40).

6. System according to one of Claims 4 to 5, **characterized in that** the electric connections (14, 16, 18, 20) are of sleeve-like design for the purpose of receiving an electric pin contact respectively (26, 28, 30, 32).

7. System according to one of Claims 4 to 6, **characterized in that** all the component parts of the heating element (36) are completely surrounded by a flowable plastic to form the clamping ring (10) .

8. System according to Claim 7, **characterized in that** the plastic is an electric insulator.

9. System according to one of Claims 6 to 8, **characterized in that** the system can be connected to electric components by means of pin contacts (26, 28, 30, 32), which are pushed into the sleeve-like connections (14, 16, 18, 20), wherein the pin contacts (26, 28, 30, 32) are each surrounded by an annular seal (34), which seals are dimensioned in such a way that they seal off the sleeve-like connections (14, 16, 18, 20) from the outside.

10. System according to one of Claims 1 to 9, **characterized in that** the clamping ring (10) is of elastically deformable design.

## Revendications

1. Système de raccordement de conduites flexibles, constitué d'un connecteur enfichable (2) et d'un élément chauffant électrique (36),
le connecteur enfichable (2) présentant au moins un premier raccord (4) et un deuxième raccord (6), qui sont connectés l'un à l'autre par une conduite tubulaire (8), et
au moins une portion de la conduite tubulaire (8) pouvant être chauffée par l'élément chauffant électrique (36),
l'élément chauffant électrique (36) étant encastré dans une bague de serrage (10) ayant une fente (12),
la conduite tubulaire (8) pouvant être poussée à travers la fente (12) de la bague de serrage (10) de telle sorte que la bague de serrage (10) vienne en prise autour d'au moins une portion de la conduite tubulaire (8) et s'applique contre la conduite tubulaire (8),
**caractérisé en ce que**
l'élément chauffant (36) présente une première piste conductrice électrique (38) ayant un premier raccord électrique (14) et une deuxième piste conductrice électrique (40) ayant un deuxième raccord électrique (16),
qui sont espacées l'une de l'autre d'une distance A dans la direction longitudinale de la bague de serrage (10),
qui s'étendent à chaque fois dans la direction périphérique de la bague de serrage (10) et qui sont connectées électriquement l'une à l'autre par au moins une résistance chauffante électrique (42, 44) s'étendant dans la direction longitudinale de la bague de serrage (10).

2. Système selon la revendication 1, **caractérisé en ce que** les deux pistes conductrices (38, 40) sont situées sur un film électriquement isolant (54) à distance l'une de l'autre d'une distance A dans la direction longitudinale de la bague de serrage (10) et connectées à celui-ci.

3. Système selon la revendication 2, **caractérisé en ce que** le film électriquement isolant (54) est introduit dans une bague de serrage de type pot (10) et la cavité restante de la bague de serrage de type pot (10) est complètement scellée avec un matériau de moulage isolant (60), les deux pistes conductrices (38, 40) faisant saillie hors du matériau de moulage (60).

4. Système selon la revendication 1, **caractérisé en ce que** les deux pistes conductrices (38, 40) sont réalisées sous forme de pièces estampées et chaque piste conductrice (38, 40) contient à chaque fois un élément de réception (46, 48, 50, 52) pour chaque résistance chauffante (42, 44).

5. Système selon la revendication 4, **caractérisé en ce que** l'élément chauffant (36) présente un troisième raccord électrique (18) qui est fixé à la première piste conductrice (38) et présente un quatrième raccord électrique (20) qui est fixé à la deuxième piste conductrice (40).

6. Système selon l'une quelconque des revendications 4 à 5, **caractérisé en ce que** les raccords électriques (14, 16, 18, 20) sont réalisés en forme de douilles pour recevoir à chaque fois un contact à broches électrique (26, 28, 30, 32).

7. Système selon l'une quelconque des revendications 4 à 6, **caractérisé en ce que** tous les constituants de l'élément chauffant (36), pour former la bague de serrage (10), sont entourés complètement par un plastique fluide.

8. Système selon la revendication 7, **caractérisé en ce que** le plastique est électriquement isolant.

9. Système selon l'une quelconque des revendications 6 à 8, **caractérisé en ce que** le système peut être connecté à des composants électriques par le biais de contacts à broches (26, 28, 30, 32) qui sont enfoncés dans les raccords de type douille (14, 16, 18, 20), les contacts à broche (26, 28, 30, 32) étant à chaque fois entourés par un joint d'étanchéité annulaire (34) qui est dimensionné de manière à étanchéifier vers l'extérieur les raccords de type douille (14, 16, 18, 20).

10. Système selon l'une quelconque des revendications 1 à 9, **caractérisé en ce que** la bague de serrage (10) est réalisée de manière déformable élastiquement.
